# EUROPÄISCHE PATENTSCHRIFT

(11) **EP 0 588 883 B1**
(45) Veröffentlichungstag und Bekanntmachung des Hinweises auf die Patenterteilung: **29.03.1995**
(21) Anmeldenummer: 92912130.9
(22) Anmeldetag: 17.06.1992
(51) Int. Cl.: B60S 1/36

(54) **SCHEIBENWISCHERANLAGE**
WINDSCREEN-WIPER SYSTEM
SYSTEME ESSUIE-GLACE

(30) Priorität: 18.06.1991 AT 1222/91
(43) Veröffentlichungstag der Anmeldung: 30.03.1994
(73) Patentinhaber: BATTLOGG, Stefan, A-6771 St. Anton im Montafon (AT)
(72) Erfinder: BATTLOGG, Stefan, A-6771 St. Anton im Montafon (AT)
(74) Vertreter: Torggler, Paul, Dr.
(86) Internationale Anmeldenummer: AT9200077
(87) Internationale Veröffentlichungsnummer: WO9222445

(56) Entgegenhaltungen:
- WO-A-90/11209
- US-A- 3 688 334

## Beschreibung

Die Erfindung betrifft eine Scheibenwischeranlage, insbesondere für Personenkraftwagen, mit einem einen Schwenkantrieb aufweisenden Wischerarm, der einen schwenkbar gelagerten Wischerarmteil und einen im schwenkbar gelagerten Wischerarmteil teleskopisch verschiebbaren Wischerarmteil aufweist, mit einem am freien Ende des verschiebbaren Wischerarmteiles drehbar gelagerten, im wesentlichen vollflächig quer über die Fahrzeugscheibe führbaren Wischerblatt, mit einem zwei Seilabschnitte aufweisenden ersten Seilzug zwischen einer dem Wischerblatt zugeordneten Drehscheibe und einem karosseriefesten Basisteil, wobei der erste Seilzug derart über das Basisteil geführt ist, daß er beim Verschwenken des Wischerarmes die Verdrehung des Wischerblattes relativ zum Wischerarm bewirkt, mit einem zweiten Seilzug für den Auszug des verschiebbaren Wischerarmteiles, dessen Einzug mittels des ersten Seilzuges erfolgen kann, und mit einem Seilspeicher für die Aufnahme und Abgabe des der Wischerarmlängendifferenz entsprechenden Abschnitts jedes Seilabschnitts des ersten Seilzuges.

Eine derartige Scheibenwischeranlage ist beispielsweise in der WO-A 90/11209 beschrieben. Die der sich beim Einzug verringernden Wischerarmlänge entsprechenden beiden Seilabschnitte des ersten Seilzuges werden dort auf zwei gegenläufig angetriebene Seilspulen aufgewickelt, die am Schwenklager neben- oder übereinander angeordnet sind. Der Ausschub erfolgt mittels einer den verschiebbaren Wischerarm beaufschlagenden Schraubenfeder, an deren Stelle der nicht näher erläuterte zweite Seilzug vorgesehen sein kann.

Die Lagerachsen der beiden Seilspulen verändern bei der Wischbewegung ihre Lage nicht, und bilden damit den obenerwähnten karosseriefesten Basisteil, zu dem der Wischerarm relativ verschwenkt und der die Verdrehung der Drehscheibe bewirkt, wodurch eine zumindest angenäherte Parallelführung des Wischerblattes erzielt wird. Hiebei ergeben sich vor allem konstruktive Probleme in der Dimensionierung des Scheibenwischers und insbesondere des Wischerarmes, der eine möglichst wenig sichtbehindernde Querschnittsfläche aufweisen soll bzw. muß, sowie bei Verwendung der Schraubenfeder, die den Wischerarm umgibt und selbst von einem Faltenbalg umgeben ist, durch die ständige Federbeaufschlagung. Da das Wischerblatt die Scheibe vollflächig überstreichen soll, bestimmt das Scheibenformat die Genauigkeit der Parallelführung. Diese ist bei rechteckiger Scheibe exakt; da jedoch die meisten Windschutzscheiben geneigte Seitenränder aufweisen, also trapezförmig sind, erfährt das Wischerblatt während der Wischbewegung eine geringfügige Verdrehung um wenige Grade.

Die Erfindung hat es sich nun zur Aufgabe gestellt, eine Scheibenwischeranlage der eingangs genannten Art so weiterzubilden, daß Einzug und Ausschub des Wischerarmes bei relativ einfacher Seilführung und verhältnismäßig kleinen Dimensionen des Wischerarmes definiert und zuverlässig erfolgen kann.

Erfindungsgemäß wird dies dadurch erreicht, daß der den Auszug bewirkende zweite Seilzug aus einem Auszugseil besteht, das von einer im Schwenklager des Wischerarmes gelagerten, angetriebenen ersten Seilscheibe über eine im Abstand zur ersten Seilscheibe konstante, auf dem schwenkbar gelagerten Wischerarmteil angeordnete zweite Seilscheibe zum verschiebbaren Wischerarmteil geführt ist, und daß der zweite Seilzug ferner ein Einziehseil umfaßt, das vom verschiebbaren Wischerarmteil zur angetriebenen ersten Seilscheibe zurückgeführt ist, wobei der erste Seilzug im Auszugseil oder im Einziehseil des zweiten Seilzuges ausgebildet ist.

Die Führung des zweiten Seilzuges über zwei im Abstand konstante Seilscheiben verringert Breite und Höhe des Wischerarmes, da auch das Auszugseil und das Einziehseil des zweiten Seilzuges innerhalb des Wischerarmes geführt werden können, und verringert auch die Höhe des Schwenklagers, da nur eine einzige angetriebene Seilscheibe untergebracht werden muß.

In einer ersten bevorzugten Ausführung umfaßt der Seilspeicher für den ersten Seilzug einen Teil des Umfanges der angetriebenen ersten Seilscheibe. Trotz der Verdrehung der angetriebenen Seilscheibe um die Schwenkachse bleibt die Führung des Wischerblattes gewahrt, da beide Seilabschnitte des ersten Seilzuges um dasselbe Ausmaß eingezogen und freigegeben werden.

Die Zuführung beider Seilabschnitte des ersten Seilzuges zum seilspeichernden Teil des Umfangs der angetriebenen ersten Seilscheiben ist prinzipiell in verschiedener Weise denkbar, wobei zumindest ein Seilabschnitt gegebenenfalls auch über eine Umlenkrolle geführt werden kann, um dieselbe Einzugsrichtung und Freigaberichtung für beide Seilabschnitte zu erzielen. Eine konstruktiv einfache Ausführung sieht jedoch die gemeinsame Zuführung beider Seilabschnitte des ersten Seilzuges in den seilspeichernden Teil des Umfangs der angetriebenen Seilscheibe vor.

Um den Durchmesser der angetriebenen ersten Seilscheibe möglichst klein halten zu können, erstreckt sich der seilspeichernde Teil des Umfangs über eine möglichst große Bogenlänge. Der Verdrehungswinkel der Seilscheibe ist dadurch größer als der Schwenkwinkel des Wischerarmes zwischen seinen beiden Umkehrpositionen. Ein zusätzlicher Antrieb für die Seilscheibe wird dabei dadurch eingespart, daß zwischen dem Schwenkantrieb des Wischerarmes und der im Schwenklager des Wischerarmes gelagerten, angetriebenen ersten Seilscheibe des zweiten Seilzuges ein Übersetzungsgetriebe ausgebildet ist.

Ausgehend von einer mittleren Position des Wischerarmes, in der er seine kürzeste Länge aufweist, wird der Wischerarm bis zur Umkehrposition ausgeschoben und bis zur mittleren Position wieder eingezogen. Dieselben Bewegungen laufen beim Verschwenken in die andere Richtung ab. Die Seilscheibe wird über das Übersetzungsgetriebe in dieser Weise gesteuert, wofür das Übersetzungsgetriebe bevorzugt einen gezahnten Schieber aufweist, der in ein Ritzel eingreift und sowohl im schwenkbar gelagerten Wischerarmteil als auch entlang einer sehnenartigen Führungsbahn des Schwenklagers zwangsgeführt ist. Somit bewirkt jedes Verschwenken des Wischerarmes aus der mittleren Position über die Umkehrposition zurück in die mittlere Position eine Verdrehung der angetriebenen ersten Seilscheibe in beide Richtungen.

In einer bevorzugten Ausführung ist vorgesehen, daß die beiden Seilabschnitte des ersten Seilzuges durch eine Einrichtung zur variablen Schlaufenbildung geführt sind, die zwei erste dem Schwenklager zugeordnete Umlenkrollen und zwei zweite auf dem schwenkbar gelagerten Wischerarmteil angeordnete Umlenkrollen aufweist, wobei sich die ersten und zweiten Umlenkrollen beim Verschwenken des Wischerarms relativ zueinander bewegen und die Verdrehung des Wischerblattes bewirken. Somit ist eine flaschenzugähnliche Seilumlenkung gegeben, über die die auf das Wischerblatt einwirkenden äußeren Kräfte und Drehmomente reduziert auf die Teile des Übersetzungsgetriebes zwischen der angetriebenen Seilscheibe des zweiten Seilzuges und dem Schwenkantrieb des Wischerarmes übertragen werden.

Die Einrichtung zur variablen Schlaufenbildung umfaßt bevorzugt gleichzeitig den karosseriefesten Basisteil, dessen Anordnung von der angetriebenen ersten Seilscheibe ortsunabhängig ist, was sich wiederum günstig auf die Dimensionierung der Scheibenwischeranlage auswirkt.

In einer ersten Ausführung sind die beiden ersten Umlenkrollen auf dem Schwenklager angeordnet, wobei der Winkel zwischen den beiden ersten Umlenkrollen insbesondere größer als der Schwenkwinkel des Wischerarmes ist. Zwischen den beiden ersten Umlenkrollen kann eine kreisbogenförmige Gleitführung für die Seilabschnitte des ersten Seilzuges vorgesehen sein, sodaß die Schlaufenbildung und Schlaufenveränderung beide Seilabschnitte des ersten Seilzuges entsprechend dem Schwenkwinkel des Wischerarmes gleich verändert. Zur Verringerung der Reibung können mehrere erste Umlenkrollen entlang des Kreisbogens auf dem karosseriefesten Basisteil des Schwenklagers angeordnet sein, wobei der Unterschied zwischen den Teillängen des Kreisbogens zwischen zwei ersten Umlenkrollen und den jeweiligen Schwenklängen unberücksichtigt bleiben kann. Der Fehler wird umso geringer, je dichter die ersten Umlenkrollen nebeneinander liegen.

In einer zweiten Ausführung sind die beiden ersten Umlenkrollen ebenfalls auf dem schwenkbar gelagerten Wischerarmteil, jedoch in der Länge verschiebbar angeordnet, wobei am Schwenklager eine Steuerfläche vorgesehen ist, deren Verlauf die Verschiebung des Umlenkrollenpaares bestimmt. Ein mit dem Umlenkrollenträger verbundener Steuerstift tastet während der Verschwenkung die Steuerfläche ab, die bevorzugt eben ausgebildet sein wird, sodaß sich eine gleichmäßige Verdrehung des Wischerblattes ergibt. Zumindest Abschnitte der Steuerfläche sind jedoch auch gekrümmt denkbar, wenn eine "ungleichmäßige Parallelführung" erforderlich ist.

Die in der Einrichtung zur Schlaufenbildung bewirkten Längenänderungen der Seilabschnitte können auf den Drehwinkel des Wischerblattes abgestimmt werden, wenn zwischen der Drehscheibe und dem Drehlager ein Untersetzungsgetriebe vorgesehen ist.

Eine weitere bevorzugte Ausführung sieht vor, daß die beiden Seilzüge aus einem einzigen Seil bestehen, das - als Auszugseil - vom Festpunkt des ersten Seilendes am verschiebbaren Wischerarmteil über die zweite Seilscheibe zur angetriebenen ersten Seilscheibe, und - als die beiden Seilabschnitte des ersten Seilzuges umfassendes Einziehseil - von der angetriebenen ersten Seilscheibe über eine erste Umlenkrolle, eine zweite Umlenkrolle zur Drehscheibe am verschiebbaren Wischerarmteil, und über eine weitere erste Umlenkrolle und eine weitere zweite Umlenkrolle wieder zurück zur angetriebenen ersten Seilscheibe geführt ist, an der der Festpunkt für das zweite Seilende im Eintrittsbereich des von der zweiten Seilscheibe zur ersten Seilscheibe führenden Auszugseiles liegt. Je nach Ausführung kann das Seil über zusätzliche erste und/oder zweite Umlenkrollen geführt sein.

Nachstehend wird nun die Erfindung an Hand der Figuren der beiliegenden Zeichnungen näher beschrieben:
Es zeigen:
- Fig. 1: eine Draufsicht auf eine Windschutzscheibe mit einer erfindungsgemäßen Scheibenwischeranlage,
- Fig. 2 und 3: schematische Darstellungen der beiden Seilzüge in einer ersten Ausführung in zwei verschiedenen Wischerarmpositionen,
- Fig. 4a und 4b: einen Längsschnitt durch den Scheibenwischer mit eingezogenem Wischerarm,
- Fig. 5: eine Draufsicht auf das freie Wischerarmende gemäß Fig. 4,
- Fig. 6: den Drehlagerbereich des Wischerblattes im Schnitt nach der Linie VI-VI der Fig. 4b,
- Fig. 7: eine Draufsicht auf das freie Wischerarmende bei ausgeschobenem Wischerarm,
- Fig. 8 und 9: teilgeschnittene Ansichten des Schwenklagers von der Seite des Wischerarmes und von der gegenüberliegenden Seite,
- Fig. 10: einen Schnitt nach der Linie X-X in Fig. 9,
- Fig. 11 bis 13: Schnitte durch das Schwenklager gemäß der Linie XI-XI in Fig. 9 in drei verschiedenen Stellungen des Wischerarmes,
- Fig. 14: einen Teilschnitt nach der Linie XIV-XIV in Fig. 12,
- Fig. 15: einen Teilschnitt gemäß der Linie XV-XV in Fig. 11, und
- Fig. 16 und 17: schematische Darstellungen der beiden Seilzüge in einer zweiten Ausführung.

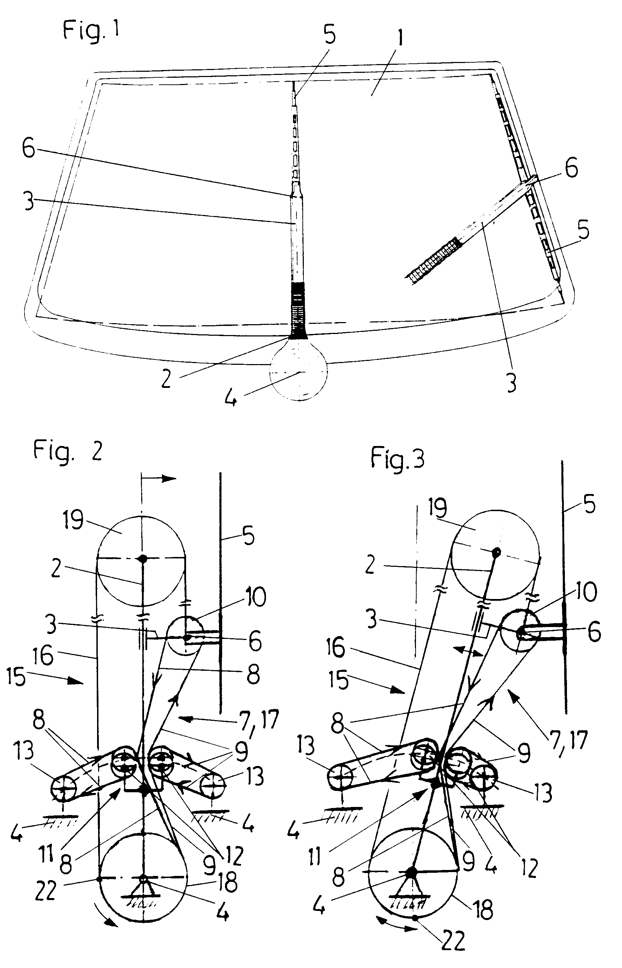

Wie aus Fig. 1 ersichtlich, weist die Scheibenwischeranlage einen Wischerarm auf, der um ein etwa mittig unterhalb der Fahrzeugscheibe 1 angeordnetes Schwenklager 4 verschwenkbar ist. Der Wischerarm besteht aus zwei teleskopartig ineinander verschiebbaren Teilen 2,3, von denen der Wischerarmteil 2 auf dem Schwenklager 4 gelagert ist und der Wischerarmteil 3 am freien Ende ein Drehlager 6 für ein Wischerblatt 5 trägt. Das Wischerblatt 5 wird bei der Verschwenkung des Wischerarmes so verdreht bzw. geführt, daß die Fahrzeugscheibe 1 vollflächig überstrichen wird. Je nach der Fläche der Fahrzeugscheibe 1 unterliegt daher das Wischerblatt 5 einer mehr oder minder angenäherten Parallelführung. Hiefür sind wie aus der rechten Seite von Fig. 1 ersichtlich, zwei Bewegungen zu koordinieren, nämlich die Verschiebung der Wischerarmteile 2,3 und die Verdrehung des Wischerblattes 5 jeweils in Abhängigkeit vom Schwenkwinkel des Wischerarmes. Um die Querschnittsmaße des Wischerarmes möglichst klein zu halten, werden diese beiden Bewegungen Hilfe von Seilzügen 7 und 15 verwirklicht, die innerhalb des Wischerarmes geführt werden.

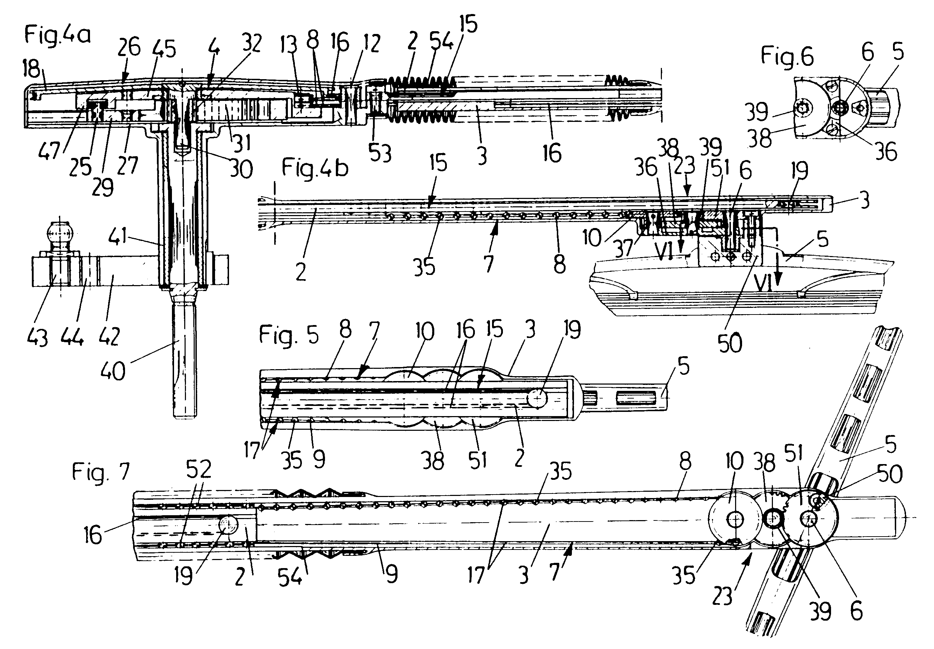

Die Fig. 4 bis 15 zeigen die Anordnung der beiden Seilzüge 7,15, die, beschränkt auf die unbedingt erforderlichen Teile, zuvor anhand der schematischen Darstellungen von Fig. 2 und 3 näher erläutert wird.

Der erste Seilzug 7 umfaßt zwei Seilabschnitte 8 und 9 und dient zur Verdrehung des Wischerblattes 5 im Drehlager 6 während der Verschwenkung des Wischerarmes. Der zweite Seilzug 15 umfaßt ein Auszugseil 16 und ein Einziehseil 17 und dient zur Verschiebung des Wischerarmteiles 3 im schwenkbar gelagerten Wischerarmteil 2. Dieser zweite Seilzug 15 ist um eine angetriebene erste Seilscheibe 18, die im Schwenklager 4 gelagert ist, und um eine zweite Seilscheibe 19, die auf dem schwenkbar gelagerten Wischerarmteil 2 gelagert ist, geführt und am verschiebbaren Wischerarmteil 3 befestigt. Im Prinzip ist der zweite Seilzug 15 somit - unter Zwischenschaltung des verschiebbaren Wischerarmteiles 3 - in sich geschlossen. Eine Verdrehung der ersten Seilscheibe 18 bewirkt somit den Aus- bzw. Einzug des Wischerarmteiles 3.

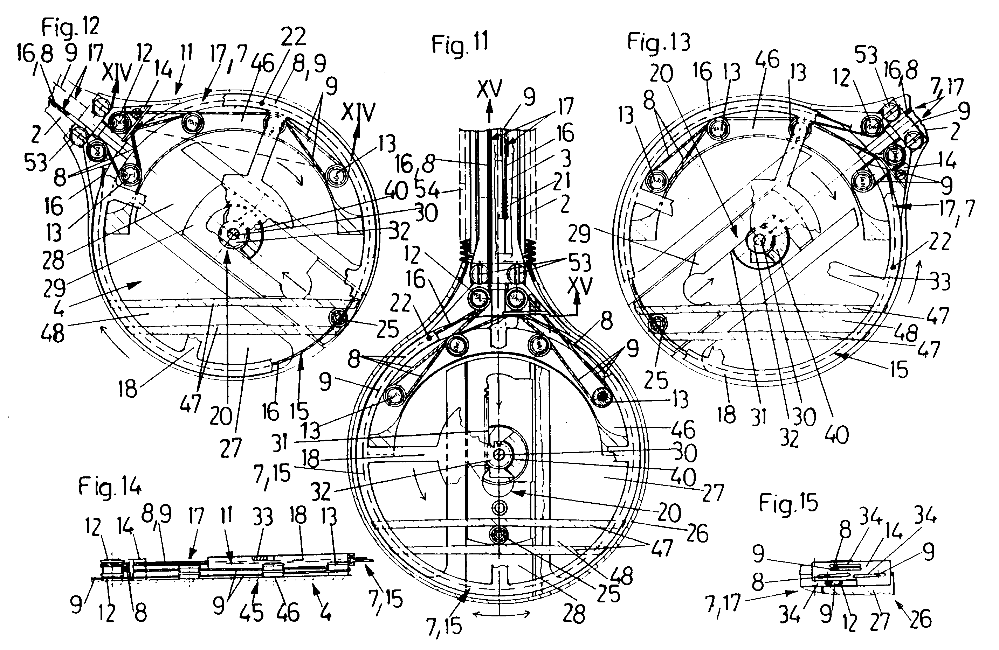

Um das Wischerblatt 5 in Abhängigkeit vom Schwenkwinkel relativ zum Wischerarm zu verdrehen, ist der erste Seilzug 7 um eine dem Drehlager 6 zugeordnete Drehscheibe 10 und einen die Verdrehung bewirkenden karosseriefesten Basisteil geführt, wobei für die der Wischerarmlängendifferenz entsprechenden Abschnitte der beiden Seilabschnitte 8 und 9 ein Seilspeicher zur Verfügung steht. Auch der erste Seilzug 7 ist im Prinzip in sich geschlossen. Anstelle der theoretisch erforderlichen vier Seilabschnitte (zwei pro Seilzug) werden nur drei Seilabschnitte benötigt, da der erste Seilzug 7 in den zweiten Seilzug 15 integriert ist und dessen Einziehseil 17 bildet. Anders ausgedrückt ist das Einziehseil 17 als Doppelseil ausgebildet, das aus den beiden nebeneinander verlaufenden Seilabschnitten 8 und 9 besteht. Bei der Verdrehung der angetriebenen ersten Seilscheibe 18 werden somit die beiden Seilabschnitte 8 und 9 über die Seilscheibe 18 geführt, die mit einem Teil ihres Umfanges somit den Seilspeicher für die abspeichernden Abschnitte der beiden Seilabschnitte 8 und 9 bildet. Je nach Stellung des verschiebbaren Wischerarmteiles 3 liegt daher im seilspeichernden Umfangsteil der Seilscheibe nur der zweite Seilzug 15 (Fig. 12,13) oder auch der erste Seilzug 7 (Fig.11). Die Aufgabe des ersten Seilzuges 7, nämlich die relative Verdrehung des Wischerblattes 5 wird dadurch nicht behindert, da beide Seilabschnitte 8,9 immer um dieselbe Teillänge in den seilspeichernden Umfangsteil der Seilscheibe 18 eingezogen bzw. daraus abgegeben werden. Der für die relative Verdrehung des Wischerblattes 5 erforderliche karosseriefeste Basisteil, von dem sich die Seilabschnitte 8,9 im Sinne einer Parallelführung zur Drehscheibe 10 erstrecken, weist eine Einrichtung zur variablen Schlaufenbildung 11 auf. Diese setzt sich pro Seilabschnitt 8,9 aus einer am Schwenklager 4 angeordneten ersten Umlenkrolle 13 und aus zwei am schwenkbar gelagerten Wischerarm 2 angeordneten zweiten Umlenkrollen 12 zusammen. Die beiden zweiten Umlenkrollen 12 sind in Fig. 2 und 3 der Übersichtlichkeit halber jeweils überlappend dargestellt, bevorzugt jedoch, wie aus den Fig. 4a und 11 bis 14 ersichtlich, koaxial übereinander angeordnet. Beim Verschwenken des Wischerarmes (Fig. 2,3) werden die Seilabschnitte 8 und 9 in dem Ausmaß verlängert oder verkürzt, das für die Verdrehung der Drehscheibe 10 benötigt wird. Die in den Fig. 2 bis 3 gezeigten Abschnittslängen sind jedoch aus Gründen der Anschaulichkeit größer gewählt und würden die Drehscheibe 10 in einem unerwünschten Ausmaß verdrehen. Dieses Übermaß wird in der bevorzugten Ausführung gemäß den Fig. 4 bis 15 bewußt eingesetzt, und durch ein zwischen der Drehscheibe 10 und dem Drehlager 6 des Wischerblattes 5 angeordnetes Untersetzungsgetriebe 23 ausgeglichen. Durch die flaschenzugartige Seilumlenkung in der Einrichtung zur variablen Schlaufenbildung 11, die gegebenenfalls auch mehrfach erfolgen kann, werden auf das Wischerblatt 5 einwirkende Kräfte reduziert auf die angetriebene erste Seilscheibe 18 und auf ein deren Antrieb vom Schwenkantrieb des Wischerarmes ableitendes Übersetzungsgetriebe 20 übertragen. Da der Durchmesser der Seilscheibe 18 aus Platzgründen nicht beliebig groß gewählt werden kann, vergrößert die Übersetzung des Schwenkantriebs den Verdrehungswinkel der angetriebenen Seilscheibe 18 und damit deren seilspeichernden Teil des Umfangs, dessen Länge die maximale Ausschublänge des Wischerarmteiles 3 bestimmt.

Die Fig. 2 und 3 zeigen auch, daß für die beiden Seilzüge 7,15 nur ein einziges Seil benötigt wird, dessen erstes Ende am verschiebbaren Wischerarmteil 3 bzw. einer dort angeordneten Spannfeder 21 (Fig. 11) befestigt ist, das über die zweite Seilscheibe 19 und die erste angetriebene Seilscheibe 18 zur Drehscheibe 10 und wieder zurück zur angetriebenen Seilscheibe 18 geführt ist, wobei dieser Teil die Einrichtung zur variablen Schlaufenbildung doppelt durchquert und dessen zweites Ende an einem Punkt 22 der angetriebenen Seilscheibe befestigt ist, der vom Eintrittsort des Seilendes zumindest um die Länge des seilspeichernden Umfangsteiles entfernt liegt. Da an oder nahe diesem Punkt 22 auch das Auszugseil 16 an der angetriebenen ersten Seilscheibe 18 fixiert werden kann, um dessen Durchrutschen zu verhindern, könnten auch zwei Seile verwendet werden. Ein Seil würde dann vom Festpunkt 22 zum Festpunkt am verschiebbaren Wischerarmteil 3 bzw. der Spannfeder 21 führen, und das andere vom Festpunkt 22 an der Seilscheibe 18 über die Drehscheibe 10 wieder zurück zum Festpunkt 22 gelegt werden.

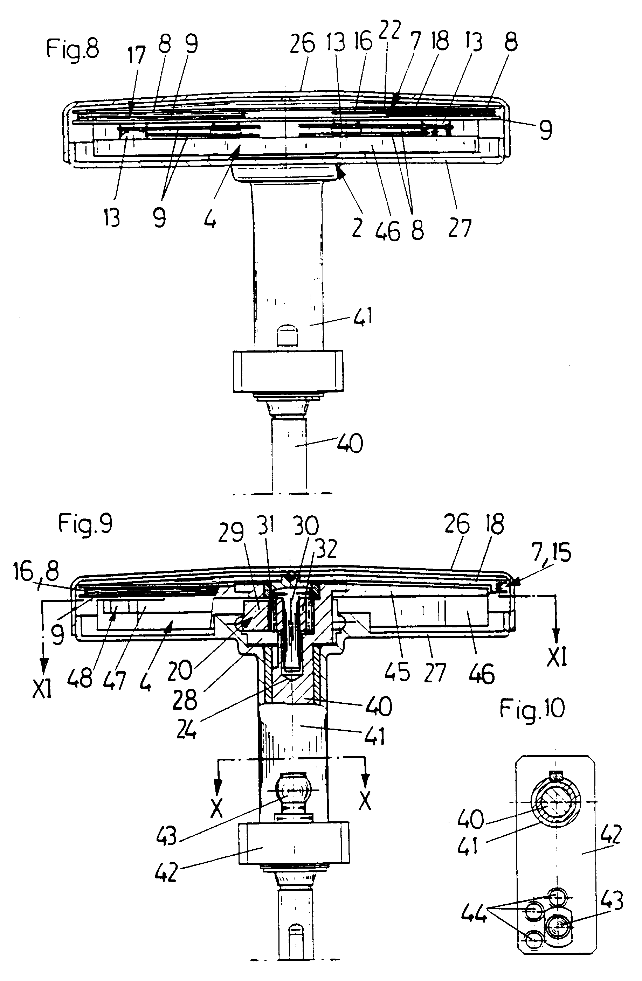

Wie in den Fig. 4 bis 15 im Detail gezeigt, umfaßt das Schwenklager 4 des Wischerarmes einen Lagerzapfen 40 und eine darauf gelagerte Hohlwelle 41 mit einem Kurbelarm 42, an dem der Schwenkantrieb in üblicher Weise angreift. Am Kurbelarm 42 sind für die Anordnung des Kurbelzapfens 43 mehrere Bohrungen 44 vorgesehen, sodaß verschiedene Schwenkwinkel erzielt werden können (Fig.10). Der Lagerzapfen 40 trägt am oberen Ende verdrehfest einen Grundkörper 45, sowie eine Lagerbohrung 24 für eine Antriebswelle 30 der angetriebenen ersten Seilscheibe 18. Der Grundkörper 45 weist etwa die Form einer Scheibe auf, die an dem den Wischerarm zugewandten Umfangshälfte mit einem nach unten abgestuften Randbereich 46 und an der gegenüberliegenden Umfangshälfte mit sehnenartig verlaufenden Führungsstegen 47 versehen ist, die an der Unterseite vorstehen (Fig. 4a, 11). Die beiden Führungsstege 47 begrenzen eine Nut 48, in die ein Führungszapfen 25 des Übersetzungsgetriebes 20 eingreift.

Mit der Hohlwelle 41 ist ein Getriebegehäuse 26 verdrehfest verbunden, das den untersten Teil des schwenkbar gelagerten Wischeramteiles 2 darstellt und somit mit dem Wischerarm mitverschwenkt wird. Dessen Bodenplatte 27 weist eine sich diametral erstreckende Führungsnut 28 auf, in der ein Schieber 29 verschiebbar ist. Dieser trägt den in die Nut 48 des Grundkörpers 45 eingreifenden, insbesondere mit einer Rolle versehenen Führungszapfen 25. Wie aus der Fig. 11 bis 13 ersichtlich, verschiebt die Verschwenkung des Getriebegehäuses 26 den Schieber 29 vor und zurück. Diese alternierende Bewegung wird über eine am Schieber 29 ausgebildete Zahnstange 31 und ein an der Antriebswelle 30 der angetriebenen ersten Seilscheibe 18 angeordnetes Ritzel 32 in die alternierende Drehbewegung der Seilscheibe 18 übersetzt. Die Seilscheibe 18, deren die Seilrille tragender Umfangsteil über Speichen 33 von der auf der Antriebswelle 30 angeordneten Nabe gehalten ist, liegt über dem Grundkörper 45 und übergreift ihn teilweise (Fig. 4a, 9). Die Seilscheibe 18 und der Grundkörper 45 sind in den Fig. 11 bis 13 nur angedeutet, um das darunterliegende Übersetzungsgetriebe 20 besser darstellen zu können.

Der abgestufte Randbereich 46 des Grundkörpers trägt sechs erste Umlenkrollen 13, die teilweise paarweise übereinander liegen. Vier zweite Umlenkrollen 12, die paarweise übereinander auf von der Bodenplatte 27 des Getriebegehäuses 26 hochstehenden Lagerstiften angeordnet sind, bilden zusammen mit den sechs Umlenkrollen 13 die Einrichtung zur variablen Schlaufenbildung 11, durch die die beiden Seilabschnitte 8 und 9 des ersten Seilzuges 7 geführt sind, und die den Basisteil für die Verdrehung des Wischerblattes 5 bilden. Der Verlauf des Einziehseiles 17 durch die in Fig. 12 rechte Hälfte der Einrichtung zur Schlaufenbildung 11 wird in den Fig. 14 und 15 verdeutlicht. Die beiden von der Seilscheibe 18 kommenden Seilabschnitte 8,9 treten übereinander durch die beiden in Fig. 15 obersten Schlitze 34 einer auf der Bodenplatte 27 montierten Seilführungsplatte 14 hindurch und umschlingen gemeinsam die obere zweite Umlenkrolle 12, von der aus der Seilabschnitt 8 durch den linken mittleren Schlitz 34 in die linke Hälfte der Einrichtung 11 übertritt, und der Seilabschnitt 9 durch den rechten mittleren Schlitz 34 über die anschließenden drei oder mehr ersten Umlenkrollen 13 hin und zurück zur unteren zweiten Umlenkrolle 12 verläuft, wobei sie durch den offenen unteren Schlitz 34 der Seilführungsplatte 14 geführt wird (Fig. 15). Von der unteren Umlenkrolle 12 erstreckt sich der Seilabschnitt 9 zur Drehscheibe 10 am freien Ende des ausschiebbaren Wischerarmteiles 3, wie aus Fig. 5 und 7 ersichtlich ist. In dem mit der Drehscheibe 10 zusammenwirkenden und in den zweiten Seilabschnitt 8 des ersten Seilzuges 7 übergehenden Abschnitt sind Eingriffskörper 35 vorgesehen, die in entsprechende Umfangsvertiefungen der Drehscheibe 10 formschlüssig eingreifen. Wie in Fig. 4b gezeigt ist, ist die Drehscheibe 10 am ausschiebbaren Wischerarmteil 3 in einer Tragplatte 36 drehbar gelagert, und mit einem Ritzel 37 verbunden, das ein ebenfalls in der Tragplatte 36 gelagertes Zahnrad 38 antreibt. Diesem ist wiederum ein Ritzel 39 zugeordnet, das in ein weiteres Zahnrad 51 des Drehlagers 6 des Wischerblattes 5 eingreift. Das Zahnrad 51 ist ebenfalls in der Tragplatte 36 gelagert und verdrehfest an einer Wischerblatthalterung 50 fixiert. Die Ritzel 37, 39 und die Zahnräder 38 und 51 sind Bestandteile des Untersetzungsgetriebes 23, wobei durch geeignete austauschbare Zahnradsätze die Anpassung des Drehwinkels des Wischerblattes 5 gegenüber dem Wischerarm an verschiedenen Formen der Fahrzeugscheibe 1 erfolgen kann.

Der verschiebbare Wischerarmteil 3 ist, wie aus Fig. 7 ersichtlich, in Form einer flachen Rinne ausgebildet und mittels zweier Kugelkäfige 52 auf dem schwenkbar gelagerten Wischerarmteil 2 geführt, der als flache Schiene ausgebildet ist, die in der Rinne gleitet. Die den Wischerarmteil 2 bildende Schiene ist am Getriebegehäuse 26 mittels Schrauben 53 befestigt und insbesondere aus einem federnden Material ausgeführt, sodaß sich ein Gelenk erübrigt. Wie in Fig. 4a, 7 und 11 angedeutet, kann zwischen dem Getriebegehäuse 26 und dem verschiebbaren Wischerarmteil 3 ein Faltenbalg 54 oder dergleichen vorgesehen sein. Statt des Faltenbalges 54 könnte aber vom Getriebegehäuse 26 auch ein Hüllrohr abstehen, das etwa die Länge des schwenkbaren Wischerarmteiles 2 aufweist, aus dem der verschiebbare Wischerarmteil 3 herausgezogen wird. Am freien Ende des Hüllrohres wird dann eine Dichtung zum verschiebbaren Wischerarmteil 3 eingesetzt.

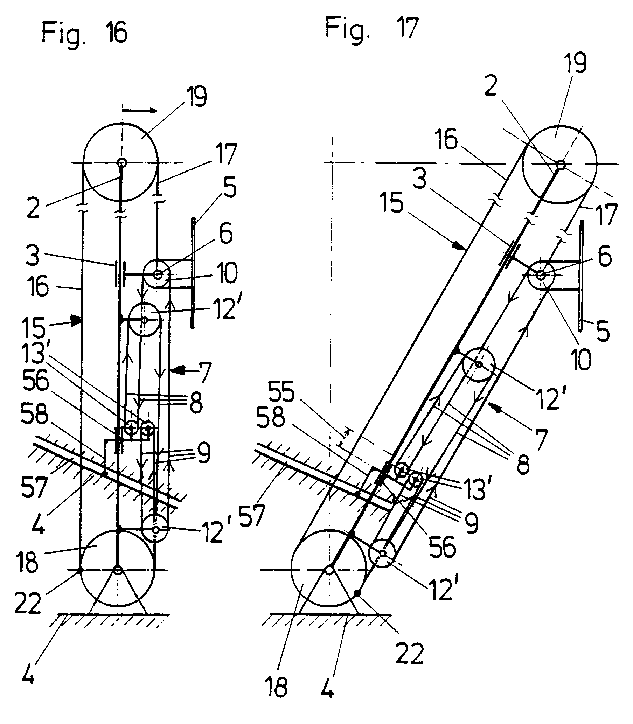

In Fig. 16 und 17 sind schematische Darstellungen des Verlaufes der beiden Seilzüge 7 und 15 in einer zweiten Ausführung. Der Verlauf des zweiten Seilzuges 15 entspricht dem in der ersten Ausführung nach Fig. 2 und 3. Hingegen ist der erste Seilzug 7 nicht um schwenklagerfeste erste Umlenkrollen geführt, sondern alle Umlenkrollen 12',13' sind auf dem schwenkbar gelagerten Wischerarmteil 2 angeordnet. Dabei sind die zweiten Umlenkrollen 12' wiederum auf festen Rollagern angeordnet. Die ersten Umlenkrollen 13' sind hingegen auf einem Rollenträger 56 angeordnet, der auf dem schwenkbar gelagerten Wischerarmteil 2 in Längsrichtung verschiebbar vorgesehen ist. Die Verschiebung der beiden ersten Umlenkrollen 13' erfolgt dabei in Abhängigkeit vom Verlauf einer bevorzugt ebenen, auf dem Schwenklager 4 ausgebildeten Steuerfläche 57, entlang der ein Steuerstift 58 des Rollenträgers 56 geführt ist. Wie ersichtlich, verläuft die Steuerfläche schräg zur mittleren Stellung des Wischerarmes (Fig. 16), sodaß der Rollenträger 56 sich bei der Verschwenkung des Wischerarmes um das Maß 55 (Fig. 17) verschiebt, sodaß die Drehscheibe 10 verdreht wird.

## Patentansprüche

1. Scheibenwischeranlage, insbesondere für Personenkraftwagen, mit einem einen Schwenkantrieb aufweisender Wischerarm, der einen schwenkbar gelagerten Wischerarmteil (2) und einen im schwenkbar gelagerten Wischerarmteil (2) teleskopisch verschiebbaren Wischerarmteil (3) aufweist, mit einem am freien Ende des verschiebbaren Wischerarmteiles (3) drehbar gelagerten, im wesentlichen vollflächig quer über die Fahrzeugscheibe (1) führbaren Wischerblatt (5), mit einem zwei Seilabschnitte (8,9) aufweisenden ersten Seilzug (7) zwischen einer dem Wischerblatt (5) zugeordneten Drehscheibe (10) und einem karosseriefesten Basisteil, wobei der erste Seilzug (7) derart über das Basisteil geführt ist, daß er beim Verschwenken des Wischerarmes (2,3) die Verdrehung des Wischerblattes (5) relativ zum Wischerarm (2,3) bewirkt, mit einem zweiten Seilzug (15) für den Auszug des verschiebbaren Wischerarmteiles (3), dessen Einzug mittels des ersten Seilzuges (7) erfolgen kann, und mit einem Seilspeicher für die Aufnahme und Abgabe des der Wischerarmlängendifferenz entsprechenden Teiles jedes Seilabschnitts (8,9) des ersten Seilzuges (7), dadurch gekennzeichnet, daß der den Auszug bewirkende zweite Seilzug (15) aus einem Auszugseil (16) besteht, das von einer im Schwenklager (4) des Wischerarmes gelagerten, angetriebenen ersten Seilscheibe (18) über eine im Abstand zur ersten Seilscheibe (18) konstante, auf dem schwenkbar gelagerten Wischerarmteil (2) angeordnete zweite Seilscheibe (19) zum verschiebbaren Wischerarmteil (3) geführt ist, und wobei der zweite Seilzug ferner ein Einziehseil (17) umfaßt, das vom verschiebbaren Wischerarmteil (3) zur angetriebenen ersten Seilscheibe (18) zurückgeführt ist und wobei der erste Seilzug (7) im Auszugseil (16) oder im Einziehseil (17) des zweiten Seilzuges (15) ausgebildet ist.

2. Scheibenwischeranlage nach Anspruch 1, dadurch gekennzeichnet, daß der Seilspeicher für den ersten Seilzug (7) einen Teil des Umfanges der angetriebenen ersten Seilscheibe (18) des zweiten Seilzuges (15) umfaßt.

3. Scheibenwischeranlage nach Anspruch 1 oder 2, dadurch gekennzeichnet, daß die beiden Seilabschnitte (8,9) des ersten Seilzuges (7) durch eine Einrichtung zur variablen Schlaufenbildung (11) geführt sind, die zwei erste, dem Schwenklager (4) zugeordnete Umlenkrollen (13, 13') und zwei zweite, auf dem schwenkbar gelagerten Wischerarmteil (2) angeordnete Umlenkrollen (12, 12') aufweist, wobei sich die ersten und zweiten Umlenkrollen beim Verschwenken des Wischerarmes relativ zueinander bewegen und die Verdrehung des Wischerblattes (5) bewirken.

4. Scheibenwischeranlage nach Anspruch 3, dadurch gekennzeichnet, daß mehrere erste Umlenkrollen (13) entlang eines Kreisbogens auf dem karosseriefesten Basisteil des Schwenklagers (4) angeordnet sind.

5. Scheibenwischeranlage nach Anspruch 3, dadurch gekennzeichnet, daß die beiden ersten Umlenkrollen (13') verschiebbar auf dem schwenkbar gelagerten Wischerarmteil (2) angeordnet und von einem entlang einer Steuerfläche (57) des Schwenklagers (4) geführten Steuerstift (58) relativ zu den beiden zweiten Umlenkrollen (12') bewegbar sind.

6. Scheibenwischeranlage nach einem der Ansprüche 1 bis 5, dadurch gekennzeichnet, daß zwischen dem Schwenkantrieb des Wischerarmes und der im Schwenklager (4) des Wischerarmes gelagerten, angetriebenen ersten Seilscheibe (18) des zweiten Seilzuges (15) ein Übersetzungsgetriebe (20) ausgebildet ist.

7. Scheibenwischeranlage nach Anspruch 6, dadurch gekennzeichnet, daß das Übersetzungsgetriebe (20) einen gezahnten Schieber (29) aufweist, der in ein Ritzel (32) eingreift, und sowohl im schwenkbar gelagerten Wischerarmteil (2), als auch entlang einer sehnenartigen Führungsbahn (47,48) des Schwenklagers (4) zwangsgeführt ist.

8. Scheibenwischeranlage nach einem der Ansprüche 1 bis 5, dadurch gekennzeichnet, daß die beiden Seilzüge (7, 15) aus einem einzigen Seil bestehen, das
- als Auszugseil (16) - vom Festpunkt des ersten Seilendes am verschiebbaren Wischerarmteil (3) über die zweite Seilscheibe (19) zur angetriebenen ersten Seilscheibe (18), und
- als die beiden Seilabschnitte (8,9) des ersten Seilzuges(7) umfassendes Einziehseil (17) - von der angetriebenen ersten Seilscheibe (18) über eine erste Umlenkrolle (13,13'), eine zweite Umlenkrolle (12,12') zur Drehscheibe (10) am verschiebbaren Wischerarmteil (3), und über eine weitere erste Umlenkrolle (13,13') und eine weitere zweite Umlenkrolle (12,12') wieder zurück zur angetriebenen ersten Seilscheibe (18) geführt ist, an der der Festpunkt (22) für das zweite Seilende im Eintrittsbereich des von der zweiten Seilscheibe (19) zur ersten Seilscheibe (18) führenden Auszugseiles (16) liegt.

9. Scheibenwischeranlage nach Anspruch 8, dadurch gekennzeichnet, daß das Auszugseil (16) zwischen den beiden Seilscheiben (19,18) über eine weitere, zweite am Wischerarm (2, 3) gelagerte Umlenkrolle (12) geführt ist.

10. Scheibenwischeranlage nach Anspruch 8 oder 9, dadurch gekennzeichnet, daß das Einziehseil (17) zwischen der ersten Seilscheibe (18) und der ersten Umlenkrolle (13) sowie zwischen der Drehscheibe (10) und der weiteren ersten Umlenkrolle (13) jeweils über eine weitere zweite Umlenkrolle (12) geführt ist.

11. Scheibenwischeranlage nach Anspruch 1, 8, 9 oder 10, dadurch gekennzeichnet, daß das erste Seilende am verschiebbaren Wischerarmteil (3) mittels einer Spannfeder (21) fixiert ist.

## Claims

1. Windshield wiper system, particularly for passenger vehicles, with a wiper arm having a pivot drive and comprising a pivotally mounted wiper arm member (2) and a wiper arm member (3) telescopically slidable in the pivotally mounted wiper arm member (2), with a wiper blade pivotally mounted at the free end of the slidable wiper arm member (3) and guidable transversely across essentially the full surface of the windshield (1), with a first cable line (7) having two cable segments (8, 9) between a pulley (10) associated with the wiper blade (5) and an automobile-body-stationary basic part, whereby the first cable line (7) is guided about the basic part such that it effects a pivoting of the wiper blade (5) relative to the wiper arm (2, 3) when the wiper arm (2, 3) is pivoted, with a second cable line (15) for drawing out the slidable wiper arm member (3), whose drawing-in may be effected by means of the first cable line (7), and with a cable storage for receiving and issuing a part of each cable segment (8, 9) of the first cable line (7) corresponding to the wiper arm length difference, characterized in that the second cable line (15) effecting the drawing-out consists of a draw-out cable (16) which is guided from a driven first cable pulley (18) mounted in the pivot bearing (4) of the wiper arm, via a second cable pulley (19) disposed on the pivotally mounted wiper arm member (2) at a constant distance from the first cable pulley (18), to the slidable wiper arm member (3), and whereby the second cable line further includes a draw-in cable (17) which is guided back from the slidable wiper arm member (3) to the driven first cable pulley (18), and whereby the first cable line (7) is formed in the draw-out cable (16) or in the draw-in cable (17) of the second cable line (15).

2. Windshield wiper system according to claim 1, characterized in that the cable storage for the first cable line (7) includes a segment on the periphery of the driven first cable pulley (18) of the second cable line (15).

3. Windshield wiper system according to claims 1 or 2, characterized in that the two cable segments (8, 9) of the first cable line (7) are guided through a device for variable loop formation (11), which includes two first guide rollers (13, 13') associated with the pivot bearing (4) and two second guide rollers (12, 12') disposed on the pivotally mounted wiper arm member (2), whereby the first and second guide rollers move relative to one another when the wiper arm is pivoted and effect the pivoting of the wiper blade (5).

4. Windshield wiper system according to claim 3, characterized in that several first guide rollers (13) are disposed along an arc on the automobile-body-stationary basic part of the pivot bearing (4).

5. Windshield wiper system according to claim 3, characterized in that the two first guide rollers (13') are shiftably disposed on the pivotally mounted wiper arm member (2) and are movable relative to the two second guide rollers (12') by a control pin (58) guided along a control surface (57) of the pivot bearing (4).

6. Windshield wiper system according to claims 1 to 5, characterized in that a transmission gearing (20) is formed between the pivot bearing of the wiper arm and the driven first cable pulley (18) of the second cable line (15) disposed in the pivot bearing (4) of the wiper arm.

7. Windshield wiper system according to claim 6, characterized in that the transmission gearing (20) includes a toothed slide (29) which meshes with a pinion (32) and which is forcibly guided in the pivotally mounted wiper arm member (2) as well as along a chord-like guide track (47, 48) of the pivot bearing (4).

8. Windshield wiper system according to claims 1 to 5, characterized in that the two cable lines (7, 15) consist of a single cable, which is guided
- as a draw-out cable (16) - from the fixed point of the first cable end at the slidable wiper arm member (3), via the second cable pulley (19), to the driven first cable pulley (18), and
- as a draw-in cable (17) encompassing the two cable segments (8, 9) of the first cable line (7) - from the driven first cable pulley (18), via a first guide roller (13, 13'), a second guide roller (12, 12') to the pulley (10) at the slidable wiper arm member (3), and via a further first guide roller (13, 13') and a further second guide roller (12, 12') back to the driven first cable pulley (18), at which the fixed point (22) is disposed for the second cable end at the entrance region of the draw-out cable (16) leading from the second cable pulley (19) to the first cable pulley (18).

9. Windshield wiper system according to claim 8, characterized in that the draw-out cable (16) is guided via a further, second guide roller (12) mounted between the two cable pulleys (18, 19) at the wiper arm (2, 3).

10. Windshield wiper system according to claims 8 or 9, characterized in that the draw-in cable (17) is guided between the first cable pulley (18) and the first guide roller (13), and between the pulley (10) and the further first guide roller (13), in each case via a further second guide roller (12).

11. Windshield wiper system according to claims 1, 8, 9 or 10, characterized in that the first cable end is fixed at the slidable wiper arm member (3) by means of a tension spring (21).

## Revendications

1. Système d'essuie-glace, en particulier pour voitures particulières, comprenant un bras d'essuie-glace qui présente un dispositif d'entraînement de pivotement et comporte une partie (2) montée pivotante et une partie (3) pouvant être déplacée de manière télescopique dans la partie (2) montée pivotante, comprenant un balai d'essuie-glace (5) monté tournant à l'extrémité libre de la partie de bras d'essuie-glace (3) mobile et pouvant être guidé transversalement sensiblement sur toute la surface du pare-brise de véhicule (1), comprenant un premier système de câbles (7) comportant deux sections de câble (8, 9) entre un disque tournant (10) associé au balai d'essuie-glace (5) et une pièce de base solidaire de la carrosserie, le premier système de câbles (7) passant sur la pièce de base de telle manière que lors du pivotement du bras d'essuie-glace (2,3), il provoque la rotation du balai d'essuie-glace (5) par rapport au bras d'essuie-glace (2, 3), comprenant un deuxième système de câbles (15) pour extraire la partie de bras d'essuie-glace (3) mobile qui peut être rétractée au moyen du premier système de câbles (7) et comprenant un enrouleur de câble pour recevoir et délivrer la partie de chaque section de câble (8, 9) du premier système de câbles (7) qui correspond à la différence de longueur du bras d'essuie-glace, **caractérisé** par le fait que le deuxième système de câbles (15) qui provoque l'extraction est constitué par un câble d'extraction (16) qui part d'une première poulie de câble (18) entraînée montée dans le palier de pivotement (4) du bras d'essuie-glace et passe sur une deuxième poulie de câble (19) disposée sur la partie de bras d'essuie-glace (2) montée pivotante à une distance constante de la première poulie de câble (18), pour arriver à la partie de bras d'essuie-glace (3) mobile et le deuxième système de câbles comprenant en outre un câble de rétractation (17) qui retourne de la partie de bras d'essuie-glace (3) mobile vers la première poulie de câble (18) entraînée et le premier système de câbles (7) étant réalisé dans le câble d'extraction (16) ou dans le câble de rétractation (17) du deuxième système de câbles (15).

2. Système d'essuie-glace selon la revendication 1, **caractérisé** par le fait que l'enrouleur de câble pour le premier système de câbles (7) entoure une partie du pourtour de la première poulie de câble (18) entraînée du deuxième système de câbles (15).

3. Système d'essuie-glace selon la revendication 1 ou 2, **caractérisé** par le fait que les deux sections de câble (8, 9) du premier système de câbles (7) passent par un dispositif (11) pour la formation variable de boucles qui présente deux premières poulies de déviation (13, 13') associées au palier de pivotement (4) et deux secondes poulies de déviation (12, 12') disposées sur la partie de bras d'essuie-glace (2) montée pivotante, les premières et les secondes poulies de déviation se déplaçant les unes par rapport aux autres lors du pivotement du bras d'essuie-glace et provoquant la rotation du balai d'essuie-glace (5).

4. Système d'essuie-glace selon la revendication 3, **caractérisé** par le fait que plusieurs premières poulies de déviation (13) sont disposées le long d'un arc de cercle sur la pièce de base solidaire de la carrosserie du palier de pivotement (4).

5. Système d'essuie-glace selon la revendication 3, **caractérisé** par le fait que les deux premières poulies de déviation (13') sont disposées de manière à pouvoir se déplacer sur la partie de bras d'essuie-glace (2) montée pivotante et peuvent être déplacées par rapport aux deux secondes poulies de déviation (12') par une tige de commande (58) guidée le long d'une surface de commande (57) du palier de pivotement (4).

6. Système d'essuie-glace selon l'une des revendications 1 à 5, **caractérisé** par le fait qu'un engrenage (20) est réalisé entre le dispositif d'entraînement de pivotement du bras d'essuie-glace et la première poulie de câble (18) entraînée montée dans le palier de pivotement (4) du bras d'essuie-glace, du deuxième système de câbles (15).

7. Système d'essuie-glace selon la revendication 6, **caractérisé** par le fait que l'engrenage (20) présente un coulisseau (29) denté qui s'engage dans un pignon (32) et est guidé de manière forcée aussi bien dans la partie de bras d'essuie-glace (2) montée pivotante que le long d'une glissière (47, 48) en forme de corde du palier de pivotement (4).

8. Système d'essuie-glace selon l'une des revendications 1 à 5, **caractérisé** par le fait que les deux systèmes de câbles (7, 15) sont constitués d'un seul câble qui
- en tant que câble d'extraction (16) va du point de fixation de la première extrémité de câble sur la partie de bras d'essuie-glace (3) mobile à la première poulie de câble (18) entraînée en passant par la deuxième poulie de câble (19), et
- en tant que câble de rétractation (17) comprenant les deux sections de câble (8, 9) du premier système de câbles (7) va de la première poulie de câble (18) entraînée, au disque tournant (10) sur la partie de bras d'essuie-glace (3) mobile en passant par une première poulie de déviation (13, 14'), une seconde poulie de déviation (12, 12') et retourne, en passant par une autre première poulie de déviation (13, 13') et une autre seconde poulie de déviation (12, 12'), à la première poulie de câble (18) entraînée sur laquelle se trouve le point de fixation (22) de la deuxième extrémité de câble dans la zone d'entrée du câble d'extraction (16) qui va de la deuxième poulie de câble (19) à la première poulie de câble (18).

9. Système d'essuie-glace selon la revendication 8, **caractérisé** par le fait que le câble d'extraction (16) est guidé entre les deux poulies de câble (18, 19) par l'intermédiaire d'une autre seconde poulie de déviation (12) montée sur le bras d'essuie-glace (2, 3).

10. Système d'essuie-glace selon la revendication 8 ou 9, **caractérisé** par le fait que le câble de rétractation (17) est guidé entre la première poulie de câble (18) et la première poulie de déviation (13) ainsi qu'entre le disque tournant (10) et l'autre première poulie de déviation (13) à chaque fois par l'intermédiaire d'une autre seconde poulie de déviation (12).

11. Système d'essuie-glace selon la revendication 1, 8, 9 ou 10, **caractérisé** par le fait que la première extrémité de câble est fixée sur la partie de bras d'essuie-glace (3) mobile au moyen d'un ressort tendeur (21).
